Europäisches Patentamt

European Patent Office

Office européen des brevets

(19)

(11) Veröffentlichungsnummer : **0 182 091**
B1

# (12) EUROPÄISCHE PATENTSCHRIFT

(45) Veröffentlichungstag der Patentschrift :
09.09.87

(21) Anmeldenummer : 85113050.0

(22) Anmeldetag : 15.10.85

(51) Int. Cl.⁴ : **B 66 F   9/065,** A 01 B 59/048,
A 01 B 63/108

(54) Kraftheber für ein Hubgerät.

(30) Priorität : 25.10.84 DE 3439048

(43) Veröffentlichungstag der Anmeldung :
28.05.86 Patentblatt 86/22

(45) Bekanntmachung des Hinweises auf die Patenterteilung : 09.09.87 Patentblatt 87/37

(84) Benannte Vertragsstaaten :
AT BE CH DE FR GB IT LI SE

(56) Entgegenhaltungen :
DE-B- 2 506 745
FR-A- 2 302 012
GB-A-   565 837
GB-A-   916 473
US-A- 2 609 741

(73) Patentinhaber : DEERE & COMPANY
1 John Deere Road
Moline Illinois 61265 (US)

(72) Erfinder : Kryscyk, Robert
Hockenheimer Strasse 153
D-6834 Ketsch (DE)

(74) Vertreter : Feldmann, Bernhard et al
DEERE & COMPANY European Office, Patent Department Steubenstrasse 36-42 Postfach 503
D-6800 Mannheim 1 (DE)

Jouve, 18, rue St-Denis, 75001 Paris, France

## Beschreibung

Die Erfindung betrifft einen Kraftheber für ein Hubgerät, insbesondere Frontkraftheber eines Ackerschleppers, mit mindestens einem höhenverstellbaren unteren Lenker und mindestens einem Ausleger, wobei der Ausleger einenends mit dem unteren Lenker drehfest verbindbar ist und anderenends vertikal schwenkbar an dem Hubgerät angelenkt ist.

Dieser Kraftheber (DE-B-2 506 745) ist zum Anbau an einen Vorderteil eines Ackerschleppers bestimmt und dient der Verbindung von Maschinen, beispielsweise Bodenbearbeitungsgeräten, mit dem Ackerschlepper. Die Verbindung erfolgt an drei Punkten über zwei untere und einen oberen Lenker, wobei die unteren Lenker zunächst in den Auslegern gelagert und mit diesen unter der Wirkung eines Hydraulikzylinders um eine Schwenkachse an dem Ackerschlepper vertikal schwenkbar sind und unter « unterer Lenker » nur der mit der Maschine direkt verbundene Teil verstanden werden soll. Die unteren Lenker bestehen hierzu im wesentlichen aus einem Verbindeglied zum Anschließen an die Maschine, einer Querwelle und einem Gabelstück, wobei die Querwelle einenends über eine Keilverzahnung mit dem Gabelstück und anderenends ebenfalls über eine Keilverzahnung mit dem Verbindeglied in verschiedenen Winkelstellungen verbindbar ist. Die Ausleger sind an ihrem dem Ackerschlepper abgelegenen Ende mit einer Lagerbüchse versehen, durch die sich die Querwelle erstreckt. Ferner sind die beiden Ausleger über eine Querstrebe starr miteinander verbunden, die zudem von den Gabelstücken umgriffen wird. Die Hydraulikzylinder greifen einenends an dem Ausleger zwischen der Lagerbüchse und dem Anlenkpunkt des Auslegers an dem Ackerschlepper und anderenends an dem Ackerschlepper selbst an. Qbwohl die Querwelle in der Lagerbüchse frei drehbar gelagert ist, kann sich der untere Lenker normalerweise nicht gegenüber dem Ausleger verschwenken, da er über das Gabelstück eine formschlüssige Verbindung mit den Auslegern eingeht.

Dieser Kraftheber ist insoweit verbesserungsbedürftig, als er nur begrenzt der jeweils gegebenen Anbausituation angepaßt werden kann, aber beim Anheben einer schweren Last oder einer Last, deren Schwerpunkt weiter von dem Ladegerät bzw. dem Ackerschlepper abliegt, eine hohe Hubkraft erfordert. So können sich Probleme beim Anheben von Maschinen ergeben, die über eine Gelenkwelle mit dem Ackerschlepper verbunden sind, wenn der Abstand zwischen den Anschlußstellen der Gelenkwelle zu gering ist und die Gelenkwelle nicht übermäßig gekürzt werden soll oder kann.

Die der Erfindung zugrunde liegende Aufgabe wird darin gesehen, diesen Kraftheber so weiterzubilden, daß er noch besser den jeweiligen Anbausituationen angeglichen werden kann.

Diese Aufgabe ist gemäß der Erfindung dadurch gelöst worden, daß der Ausleger wahlweise auch mit dem unteren Lenker vertikal schwenkbar verbindbar ist und an dem Hubgerät drehfest anlenkbar ist.

Auf diese Weise kann die Last entweder um eine Schwenkachse zwischen dem unteren Lenker und dem Ausleger oder um eine Schwenkachse zwischen dem Ausleger und dem Hubgerät verschwenkt werden. Da diese beiden Schwenkachsen unterschiedlich weit vor dem Hubgerät oder im speziellen vor dem Ackerschlepper liegen, verlagert sich auch der Hubbereich des Krafthebers. Er kann sich so weit nach hinten und auf das Hubgerät zu verschieben, daß auch eine schwere Last, beispielsweise ein frontseitig an den Ackerschlepper angebauter Pflug, den Ackerschlepper nicht auf der dem Kraftheber entgegengesetzten Seite seines Aufstandspunktes anhebt. Und zwar ist dies unabhängig davon, ob die Last über eine auf die unteren Lenker oder über eine auf einen oberen Lenker eingeleitete Kraft angehoben wird, denn die Kinematik bleibt dadurch unverändert. Weiterhin kann durch die Hubbereichsverlagerung, wenn das Gewicht der Last vernachlässigbar ist, die Last, etwa ein Frontmähwerk eines Ackerschleppers, weiter weg von dem Ackerschlepper beim Anheben gehalten werden, so daß eine sich zwischen dem Ackerschlepper und dem Frontmähwerk erstreckende Gelenkwelle nicht übermäßig zusammengeschoben und eventuell beschädigt wird. Es kann zudem durch die Verlagerung des Hubbereichs auf das Hubgerät zu die Gesamtlänge des Hubgeräts mit der Last verringert werden, so daß wiederum bei einem Ackerschlepper die durch gesetzliche Vorschriften vorgegebenen Höchstmaße eingehalte werden können.

Eine Verringerung der Hubkraft wird bei einem Kraftheber mit einer Hubeinrichtung zum Höhenverstellen des unteren Lenkers auch dadurch erreicht, daß die Hubeinrichtung an dem unteren Lenker angreift. Durch diese erfindungsgemäße Maßnahme wird im Gegensatz zum bekannten Kraftheber die Möglichkeit geschaffen, den Kraftangriffspunkt der Hubeinrichtung an dem unteren Lenker mit dem Ausleger weiter von der Schwenkachse an dem Ladegerät weg zu verlagern, so daß der Hebelarm zum Anheben der Last verlängert wird und zum Erzielen des gleichen Momentes eine geringere Kraft erforderlich ist. Dabei ist es vollkommen unerheblich, ob der Ausleger an dem Hubgerät oder der untere Lenker an dem Ausleger schwenkt.

Entsprechend einem weiteren erfinderischen Vorschlag ist vorgesehen, daß der Ausleger an dem Hubgerät in verschiedenen Winkelstellungen drehfest anschließbar ist. Dieser Vorschlag führt zu einer Klassifizierung der gesamten Hubbereichsmöglichkeiten in Bereiche, die jeweils einer Winkelstellung zugeordnet werden, so daß eine Bedienungsperson des Ladegeräts entweder rechnerisch oder durch Erfahrung für jede Last oder für jede Maschine bei einem Ackerschlepper den optimalen Hubbereich auswählen kann. So kann diese beispielsweise bei insgesamt drei vorhandenen Winkelstellungen übersichtlich und einfach unterscheiden in einen vom Ladegerät weit abliegenden, einen diesem zugelegenen und einen mittleren Hubbereich.

Auf eine einfache der Erfindung entsprechende Art wird eine Einstellung des Auslegers und des unteren Lenkers bei einem Kraftheber, dessen unterer Lenker um eine Schwenkachse an dem Ausleger in verschiedene Winkelstellungen schwenkbar und festlegbar ist und dessen Ausleger gegenüber dem Hubgerät um eine Schwenkachse verschwenkbar ist, auf die jeweilige Lage der Anhängepunkte, auf das Gewicht der anzuhängenden Last und auf den zum Ladegerät einzuhaltenden Abstand dadurch erreicht, daß entsprechend den möglichen Winkelstellungen auf einem Radius um die Schwenkachse des unteren Lenkers in dem Ausleger Ausnehmungen vorgesehen sind und der untere Lenker im Abstand des Radius von der Schwenkachse ebenfalls eine Ausnehmung aufweist, in die ein Halteelement zur Verbindung mit den Ausnehmungen in dem Ausleger einführbar ist, und/oder auf einem bestimmten Radius um die Schwenkachse in dem Ausleger wenigstens eine und an dem Hubgerät mehrere Ausnehmungen vorhanden sind, die über ein Haltemittel miteinander in verschiedenen Winkelstellungen verbindbar sind.

Besonders günstig wirkt sich die Hubbereichsverlagerung in bezug auf eine Reduktion der Hubkraft aus, wenn auf dem unteren Lenker mehrere Anlenkpunkte für die Hubeinrichtung vorgesehen sind, die jeweils einen anderen Abstand zu dessen Schwenkachse aufweisen, da dann der Hebelarm zum Anheben der Last durch das Verlagern des Kraftangriffspunktes der Hubeinrichtung an dem unteren Lenker so lang wie möglich gestaltet werden kann.

Um eine Beschädigung einer als Hydraulikzylinder ausgebildeten Hubeinrichtung durch Krafteinwirkung von außen zu verhindern und/oder um den erforderlichen Raum für den Kraftheber so gering wie möglich zu halten, ist nach einem weiteren Vorschlag der Erfindung vorgesehen, daß der Kraftheber auf einem Rahmen bestehend aus geschlossenen oder einseitig offenen Hohlprofilen aufgebaut ist, die in sich je einen Hydraulikzylinder aufnehmen.

Zur Vereinfachung der Bauweise des Rahmens, jedoch unter Wahrung verschiedener Ausgestaltungen des Krafthebers, um diesen verschiedenen Hubgeräten anpassen zu können, ist vorgesehen, daß an dem Rahmen mindestens eine die Ausnehmungen des Hubgerätes aufweisende Platte angebracht ist, die einen Winkelhebel zur Übertragung der Kraft von dem Hydraulikzylinder auf den unteren Lenker schwenkbar aufnimmt. Diese erfinderische Maßnahme schafft die Möglichkeit, die Hubeinrichtung als eine Drückeeinrichtung auszubilden, deren Bewegung durch den Winkelhebel in die gewünschte Richtung umgeleitet wird, so daß bei Verwendung eines Hydraulikzylinders dieser kolbenseitig anstatt kolbenstangenseitig mit Druckmittel beaufschlagt werden kann, um so eine größere Kraft zu entfalten. Durch die Umlenkung der Hubkraft kann die Hubeinrichtung losgelöst von der Hubrichtung anderenorts an dem Kraftheber angebracht werden, und zwar dort, wo sie am wenigsten stört.

Eine weitere Möglichkeit, den Kraftheber den gegebenen Umständen anzupassen, wird nach einem weiteren Vorschlag entsprechend der Erfindung dadurch erreicht, daß der Winkelhebel gegenüber der Platte in verschiedenen Stellungen festlegbar ist.

In vorteilhafter Weise werden Torsionskräfte an dem Winkelhebel, der Platte, dem unteren Lenker und dem Ausleger dadurch vermieden, daß die Platte, der Ausleger und der Winkelhebel jeweils doppelt vorgesehen sind, daß sich zwischen den Winkelhebeln und den unteren Lenkern eine Hubstrebe erstreckt und daß die Winkelhebel, die Platten, die Ausleger, der untere Lenker und die Hubstrebe in teleskopischer Bauart miteinander verbunden sind, derart, daß die Hubstrebe und der Hydraulikzylinder zwischen den beiden Winkelhebeln und die beiden Winkelhebel und die beiden Ausleger zwischen den beiden Platten angeordnet sind. So ist beispielsweise der Winkelhebel nicht seitlich an der Platte angelenkt, sondern mittig zwischen beiden Platten, und eine Torsionsbelastung tritt daher nicht auf.

Ein generelles Problem vieler bekannter Kraftheber, nämlich, daß die unteren Lenker weit nach vorn von dem Hubgerät wegstehen, wenn keine Last angebracht ist, und bei einem Kraftfahrzeug beim Fahren auf öffentlichen Straßen entweder abgedeckt oder gar demontiert werden müssen, wird nach der Erfindung dadurch gelöst, daß die unteren Lenker um ihre Schwenkachse in eine Transportstellung nahe an und parallel oder etwa parallel zu dem Vorderteil des Hubgerätes schwenkbar und mittels der Hubstreben an dem rahmen festlegbar sind. Ein Kraftheber, der spiegelbildlich zu einer Längsmittenachse eines Ackerschleppers ausgebildet ist und zu jeder Seite des Längsmittenachse einen unteren Lenker, eine Hubeinrichtung, einen Ausleger und auf der Längsmittenachse einen Halter für einen oberen Lenker aufweist, wird besonders in sich stabil, wenn sich zwischen den der Längsmittenachse zugelegenen Platten eine Verstrebung erstreckt, die den Halter für den oberen Lenker trägt und in sich eine mit allen Winkelhebeln verbundene Welle drehbar aufnimmt.

Eine relativ schnelle und problemlose Ausrüstung eines Ackerschleppers mit dem erfindungsgemäßen Kraftheber für den Betrieb und den Transport wird dadurch erzielt, daß der Rahmen den gesamten Kraftheber trägt und wahlweise mit dem Vorderteil des Ackerschleppers verbindbar und mittels Haltebolzen sicherbar ist, wobei in vorteilhafter Weise die Haltebolzen gleichzeitig der Aufnahme der Hubstreben, wenn sich die unteren Lenker in ihrer Transportstellung befinden, dienen.

In der Zeichnung ist ein nachfolgend näher beschriebenes Ausführungsbeispiel der Erfindung dargestellt. Es zeigt :

Figur 1 einen Vorderteil eines Ackerschleppers mit einem erfindungsgemäßen Kraftheber in einer Betriebsstellung und in Seitenansicht,

Figur 2 den Vorderteil des Ackerschleppers mit dem erfindungsgemäßen Kraftheber in Voderansicht,

Figur 3 den Kraftheber in einer anderen Betriebsstellung.

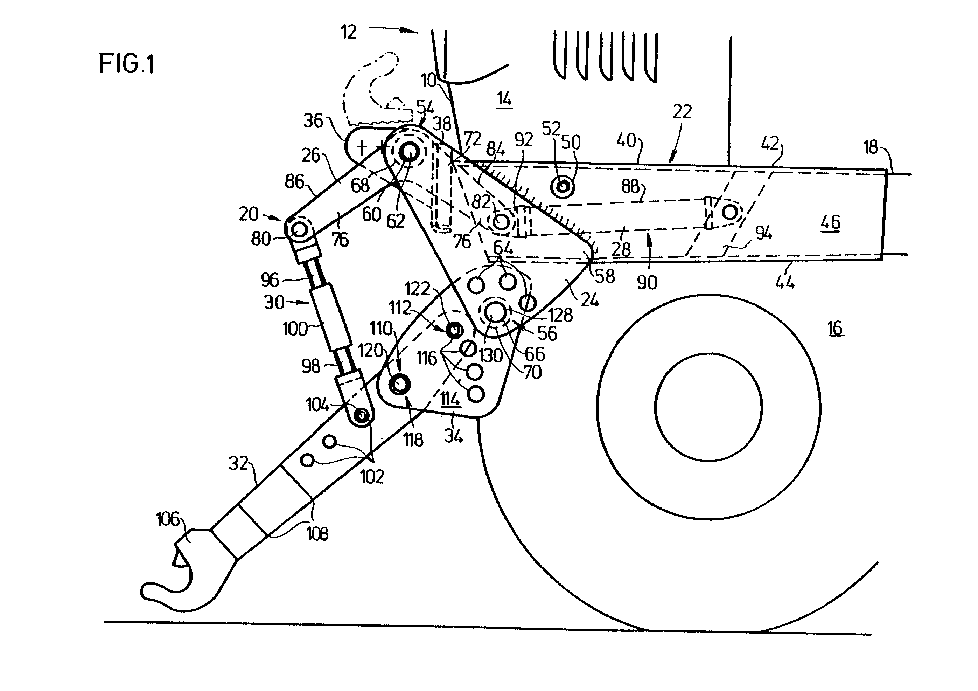

In Fig. 1 ist ein Vorderteil 10 eines Ackerschleppers 12, der allgemein als Hubgerät bezeichnet werden kann, durch eine Motorhaube 14, ein rechtes Vorderrad 16 und einen Hauptrahmen 18 angedeutet, wobei sich im folgenden benutzte Angaben wie links, rechts, vorne und hinten immer auf die Vorwärtsfahrtrichtung des Ackerschleppers 12 beziehen. Auf den Hauptrahmen 18 ist ein Kraftheber in der Art eines Frontkrafthebers 20 aufgebaut, der im wesentlichen aus einem Rahmen 22, auf jeder Seite zwei Platten 24, einem als Winkelhebel ausgebildeten Hubarm 26, einem Hydraulikzylinder 28 als Hubeinrichtung, einer Hubstrebe 30, einem unteren Lenker 32, einem Ausleger 34 und in der Mitte einem Halter 36 für einen nicht gezeichneten oberen Lenker besteht. Der Frontkraftheber 20 ist symmetrisch zur Längsmittenachse des Ackerschleppers 12 ausgebildet, weshalb es genügt, wenn im folgenden bei auf beiden Seiten vorkommenden gleichen Einzelheiten nur die der linken Seite beschrieben werden. Diese Beschreibung gilt dann analog für die rechte Seite.

Der Rahmen 22 ist von oben gesehen U-förmig ausgebildet und gleicht sich dem Vorderteil 10 des Ackerschleppers 12 im Bereich seines Hauptrahmens 18 im wesentlichen an, er umgibt also den Hauptrahmen 18 vorne und seitlich, und zwar mit einer Traverse 38 und zwei Seitenwangen 40. Die Seitenwangen 40 sind aus einem U-Stahl gebildet, dessen von einem oberen und einem unteren Schenkel 42 und 44 und einem diese verbindenden Steg 46 begrenzter Innenraum 48 in sich den Hauptrahmen 18 teilweise aufnehmen kann, wozu der Rahmen 22 von vorne, d. h. in Fig. 1 von links, auf den Hauptrahmen 18 in eine Betriebsstellung aufgeschoben wird. Um größere Biegemomente aufnehmen zu können, kann der U-Stahl auch mit einem sich nach vorne vergrößernden Steg 46 versehen sein. Um den Rahmen 22 und somit den gesamten Frontkraftheber 20 in seiner Betriebsstellung festhalten und sichern zu können, ist in dem Steg 46 der Seitenwangen 40 und in dem Hauptrahmen 18 auf jeder Seite des Ackerschleppers 12 je eine in der Zeichnung nicht sichtbare Bohrung vorgesehen, die beide miteinander fluchten, wenn der Rahmen 22 seine Betriebsstellung eingenommen hat, und durch welche ein Haltebolzen 50 zur Sicherung hindurchgesteckt werden kann, der mittels geeigneter nicht gezeigter Mittel, etwa einem Kappstecker oder einem Federsplint, arretiert wird. Der Haltebolzen 50 steht jedoch im eingeschobenen Zustand noch mit einem Schaftteil 52 über den jeweiligen Steg nach außen über.

An die Außenseite des Steges 46 ist eine Platte 24 flach aufgeschweißt, die im wesentlichen eine Dreiecksform einnimmt. Sie ist in einer derartigen Lage an dem Stege 46 befestigt, daß zwei Eckbereiche vor dem Rahmen 22, und zwar einer oben und einer unten 54 und 56, zu liegen kommen, während ein dritter Eckbereich 58 einen kleinen Teil des Steges 46 überdeckt. Zur weiteren Beschreibung wird der vorne oben gelegene Eckbereich 54 als oberer Eckbereich 54 und der vorne unten gelegene Eckbereich 56 als unterer Eckbereich 56 bezeichnet. Im oberen Eckbereich 54 ist eine Bohrung 60 zur Aufnahme einer Welle 62 vorgesehen, deren Bedeutung später erläutert werden wird. In den unteren Eckbereich 56 sind dagegen drei Ausnehmungen oder Bohrungen 64 und eine als Lager 66 ausgebildete Bohrung eingebracht, wobei die drei Bohrungen 64 auf einem Viertelkreis um dieses Lager 66 angeordnet sind und jeweils den gleichen Durchmesser aufweisen, der jedoch kleiner ist als der Durchmesser des Lagers 66. Insgesamt sind vier gleiche Platten 24 vorgesehen, von denen jeweils eine äußere an der Außenseite des linken und des rechten Steges 46 und je eine innere an dem vorderen Abschnitt des Rahmens 22 angebracht ist. Die an den vorderen Abschnitt des Rahmens 22 angeschweißten inneren Platten 24 weisen eine Ausnehmung auf, die der durch die äußere Platte 24 überdeckten Fläche des Rahmens 22 entspricht, so daß sie auf die Schenkel 42, 44 des Rahmens 22 aufgeschoben und darauf angeschweißt werden können. Auf diese Weise ist auf jeder Seite des Ackerschleppers 12 auf dem Rahmen 22 eine gabelförmige Konsole mit einem Zwischenraum zwischen den beiden zueinandergehörenden inneren und äußeren Platten 24 gebildet. Die jeweils einander entsprechenden Bohrungen 60, 64, 66 in den Platten 24 liegen auf rechtwinklig zu der Längsmittenachse des Ackerschleppers 12 verlaufenden Achsen.

Als Versteifung und Verstrebung des Frontkrafthebers 20 gegen seitlich, also quer zur Längsmittenachse des Ackerschleppers 12, wirkende Kräfte ist zwischen den inneren Platten 24 konzentrisch zur Mittenachse der Bohrungen 60 der oberen Eckbereiche 54 und konzentrisch zur Mittenachse der Lager 66 der unteren Eckbereiche 56 jeweils ein Rohr 68 und 70 vorgesehen, das mit den der Längsmittenachse des Ackerschleppers 12 zugewandten Seiten der inneren Platten 24 verschraubt oder verschweißt ist. Die Traverse 38 des Rahmens 22 erstreckt sich ebenfalls zwischen den inneren Platten 24 und ist entweder an diese angeschweißt oder über Winkelstücke 72 angeschraubt. Somit ist gewährleistet, daß die Innenräume 48 des Rahmens 22 nach vorne im Bereich zwischen den jeweils inneren und äußeren Platten 24 offen sind.

Der zwischen den Platten 24 gebildete Zwischenraum 48 dient einerseits der Aufnahme des Hubarmes 26 und andererseits der Aufnahme des Auslegers 34.

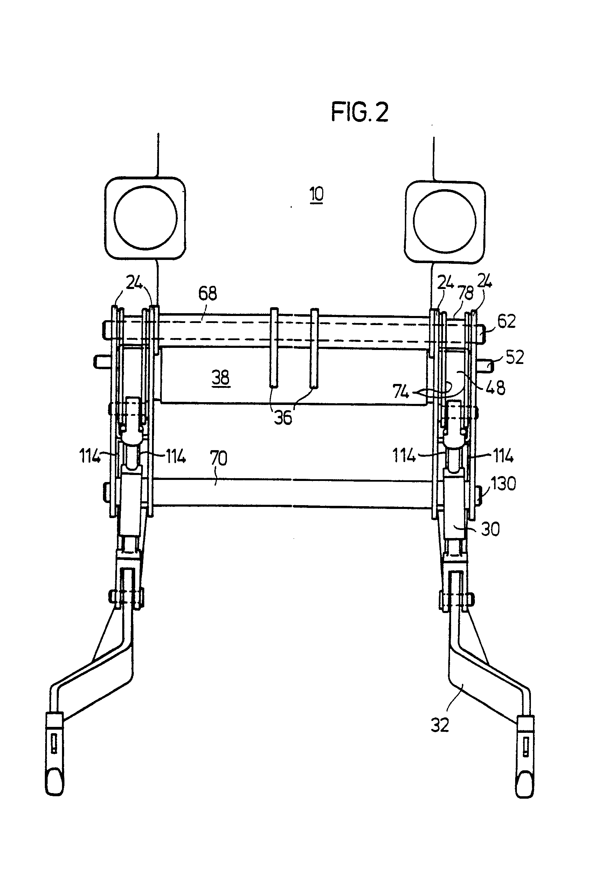

Jeder Hubarm 26 besteht aus zwei Winkelhebeln 74 mit zwei unter einem Winkel von ca. 105° zueinander verlaufenden Schenkeln 76, die über jeweils eine im Treffpunkt der beiden Schenkel 76 angeordnete Büchse 78, wie dies Fig. 2 zu entnehmen ist, miteinander formfest verbunden sind. In dem Treffpunkt der beiden Schenkel 76 wie auch in deren Endbereich ist jeweils eine in der Zeichnung nicht erkennbare Bohrung zur Aufnahme der Welle 62 und von Lagerbolzen 80 und 82 vorgesehen. Die Längsmittenachse der im Treffpunkt der Schenkel 76 gelegenen Bohrung ist gleichzeitig die Längsmittenachse der Büchse 78, sie sind also konzentrisch zueinander angeordnet. Die Büchsen 78 nehmen in sich die Welle 62 drehfest auf, so daß die Hubarme 26 mit der Welle 62 zwischen den jeweils zusammengehörenden Platten 24 vertikal gemeinsam schwenkbar sind. Gegebenenfalls können auch mehrere Bohrungen zur Aufnahme der Welle 62 angeordnet werden, um so zusätzlich eine Verstellung des Hubarmes 26 zu ermöglichen, wodurch sich die Hubhöhe und/oder der Hubbereich der unteren Lenker 32 gegebenenfalls mit den Auslegern 34 zusätzlich verlagern läßt. Selbstverständlich wäre dann auch das Rohr 68 entsprechend zu verlagern.

Ausgehend von einer Ausgangsstellung der Hubarme 26, in der die am äußeren Ende der Schenkel 76 gelegenen Bohrungen ungefähr den gleichen Abstand zur Aufstandsfläche des Ackerschleppers 12 aufweisen, wird das dem Ackerschlepper 12 zugelegene Ende der Hubarme 26 als rückwärtiges Gabelende 84 und das dem Ackerschlepper 12 abgelegene Ende als vorderes Gabelende 86 bezeichnet.

Das rückwärtige Gabelende 84 des Hubarms 26 nimmt über den Lagerbolzen 82 ein Ende einer aus einem Zylindergehäuse 88 eines als Hubeinrichtung benutzten Hydraulikzylinders 90 herausragenden Kolbenstange 92 auf, dessen Zylindergehäuse 88 an einem in den Innenraum 48 des Rahmens 22 eingeschweißten Halter 94 schwenkbar angreift. Die Kolbenstange 92 kann sich bis zu dem Hubarm 26 erstrecken, da der Rahmen 22 zwischen den Platten 24 nach vorne hin offen ist. Der Hydraulikzylinder 90 ist über nicht gezeigte Leitungen mit einem ebenfalls nicht gezeigten Steuerventil verbunden, über welches nach entsprechender Bedienung durch eine Bedienungsperson Druckflüssigkeit dem Hydraulikzylinder 90 zuführbar ist, woraufhin die Kolbenstange 92 sich aus dem Zylindergehäuse 88 bewegt oder in dieses zurückgleitet. Eine Druckbeaufschlagung des kolbenseitigen Endes des Hydraulikzylinders 90 bewirkt, daß sich die Kolbenstange 92 aus dem Zylindergehäuse 88 hinaus bewegt und dem Hubarm 26 eine mit Blick auf Fig. 1 im Uhrzeigerdrehsinn gerichtete Schwenkbewegung erteilt. Ein Druckabbau auf der Kolbenseite des Hydraulikzylinders 90 oder gar ein Druckaufbau kolbenstangenseitig des Hydraulikzylinders 90 bewirkt dagegen eine im Gegenuhrzeigerdrehsinn gerichtete Schwenkbewegung des Hubarms 26. Die Öffnung des Rahmens 22 zwischen den Platten 24 ist derart groß gewählt, daß bei vollkommen eingefahrener Kolbenstange 92 der Hubarm 26 noch teilweise in den Innenraum 48 des Rahmens 22 hineinragt.

Das vordere Gabelende 86 nimmt über den Lagerbolzen 80 die Hubstrebe 30 vertikal schwenkbar in sich auf, die in herkömmlicher Weise aus einem oberen und einem unteren Gewindeteil 96 und 98 und einer diese formschlüssig in sich aufnehmenden Gewindehülse 100 besteht, wobei die Gewindegänge des oberen und des unteren Gewindeteils 96 und 98 gegenläufig sind, so daß sich bei einer Verdrehung der Gewindehülse 100 die Gesamtlänge der Hubstrebe 30 entweder verlängert oder verkürzt. Während das obere Gewindeende 96 eine in der Zeichnung verdeckte Ausnehmung aufweist und um den Lagerbolzen 80 an dem vorderen Gabelende 86 schwenkt, greift der untere Gewindeteil 98 an dem unteren Lenker 32 schwenkbar an.

Hierzu weist der untere Gewindeteil 98, in seinem unteren gabelförmig gestalteten Endbereich zwei miteinander fluchtende der Zeichnung nicht entnehmbare Bohrungen und der untere Lenker eine Anzahl Anlenkpunkte in der Form von Bohrungen 102 auf, die über einen Bolzen 104 wahlweise mit den Bohrungen des unteren Gewindeteils 98 verbindbar sind.

Der untere Lenker 32 ist als im Querschnitt rechteckiger Flachstahllenker ausgebildet, dessen längere Schenkellänge vertikal zu liegen kommt, und weist in seinem vorderen Bereich ein Anschlußglied 106, etwa einen Fanghaken oder eine Kugelkupplung, auf. Je nach den genormten Anschlußmaßen der anzuhängenden Geräte und Maschinen ist der untere Lenker 32 vorne mehr oder weniger bei 108 nach außen gekröpft, um so ausgehend von der geringen Breite des Frontkrafthebers 20 bzw. dem Abstand der Zwischenräume zwischen den linken und den rechten Platten 24 auf den Abstand der Anlenkpunkte an dem Gerät gelangen zu können. Er weist nahe seiner oberen Kante und von den Abkröpfungen 108 nach hinten angeordnet die Bohrungen bzw. Ausnehmungen 102 auf, von denen bei diesem Ausführungsbeispiel drei unmittelbar hintereinander und mit gleichem Abstand zueinander vorgesehen sind, in geringem Abstand zu diesen eine vierte 110 folgt und eine fünfte 112 am rückwärtigen Ende des unteren Lenkers 32 vorgesehen ist. Jeweils eine der drei vorderen Bohrungen 102 kann den Bolzen 104 zur Verbindung mit dem unteren Gewindeteil 98 der Hubstrebe 30 in sich aufnehmen. Das Vorsehen einer Vielzahl von Bohrungen 102 ermöglicht es, die Hubstrebe 30 optimal an den unteren Lenker 32 anzubinden und die von dem Hydraulikzylinder 90 aufbietbare Kraft bestmöglichst zu nutzen.

Der Ausleger 34 wird ähnlich wie der Hubarm 26 wiederum von zwei einen Abstand zueinander aufweisenden Auslegerplatten 114 gebildet, die bei diesem Ausführungsbeispiel jeweils mit sieben zueinander deckungsgleichen nachfolgend einzeln benannten Bohrungen versehen sind. Diese Bohrungen werden ihrer Bedeutung nach in zwei Gruppen unterteilt, und zwar in eine erste Gruppe, die für die Hubhöhe, und eine zweite Gruppe, die für den Hubbereich des Frontkrafthebers 20 maßgebend ist. Zur ersten Gruppe gehören fünf Bohrungen, von denen vier 116 auf einem Kreisbogen um die fünfte 118 liegen. Dabei entspricht der Radius dieses Kreisbogens dem Abstand der fünften, also rückwärtigsten Bohrung 112 des unteren Lenkers 32 zu der dieser benachbarten vierten Bohrung 110 in dem unteren Lenker 32. Die fünfte Bohrung 118 der Auslegerplatten 114 und die vierte Bohrung 110 des unteren Lenkers 32 sind ständig von einem Bolzen 120 als Schwenkachse durchdrungen, der die Schwenkbarkeit des unteren Lenkers 32 zwischen den Auslegerplatten 114 ermöglicht. Wahlweise kann zusätzlich ein Halteelement oder Bolzen 122 durch die fünfte Bohrung 112 des unteren Lenkers 32 und durch eine der auf dem Kreisbogen um die fünfte Bohrung 118 der Auslegerplatten 114 gelegenen Bohrungen 116 gesteckt werden.

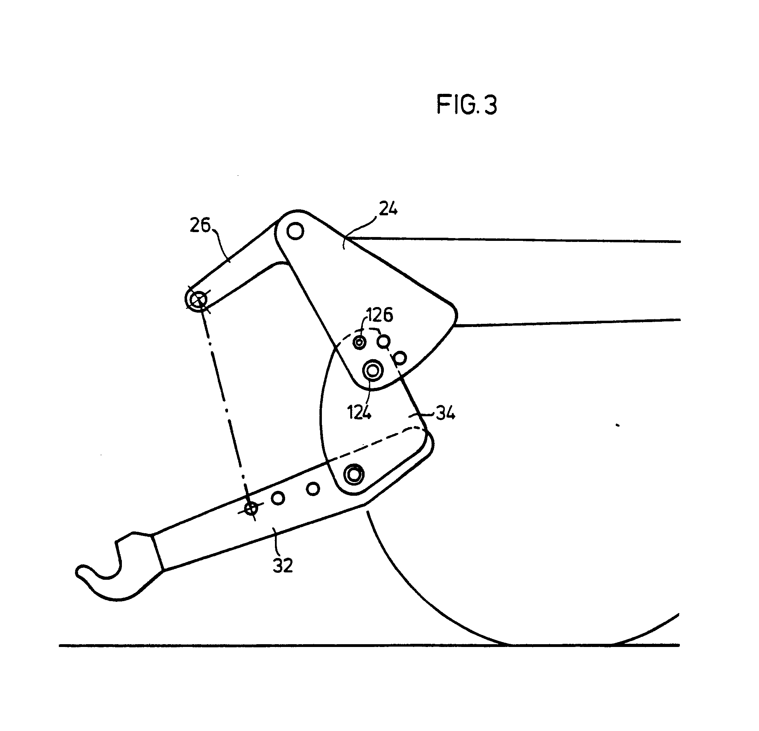

Die zweite Gruppe von Bohrungen besteht demnach, wie dies am besten aus Fig. 3 ersichtlich ist, aus nur zwei Bohrungen oder Ausnehmungen, und zwar aus einer größeren und einer kleineren 124 und 126. Zwischen den beiden Auslegerplatten 114 und konzentrisch zu den jeweiligen größeren Bohrungen 124 ist eine die beiden Auslegerplatten 114 starr miteinander verbindende Büchse 128 eingeschweißt, die der ständigen Aufnahme einer sich zwischen den äußeren Auslegerplatten 114 der linken und der rechten Seite des Frontkrafthebers 20 erstreckenden Welle 130 als Schwenkachse dient. Diese Welle 130 und die sich durch die Bohrungen 60 im oberen Eckbereich 54 der Platten 24 erstreckende Welle 62 verlaufen jeweils in den die inneren Platten 24 miteinander verbindenden Rohren 68, 70. Die beiden Auslegerplatten 114 jeder Seite sind somit gemeinsam zwischen den Platten 24 und um die Welle 130 vertikal schwenkbar. Die kleinere Bohrung 126 der zweiten Gruppe liegt von der größeren Bohrung 124 um den Radius der in den Platten 24 auf dem Viertelkreis gelegenen Bohrungen 64 zu dem Lager 66 entfernt, so daß die kleinere Bohrung 126 der zweiten Gruppe mit einer der drei Bohrungen 64 in dem unteren Eckbereich der Platten 24 in Deckung gebracht und durch diese der Bolzen 122 gesteckt werden kann. Daher kann der Bolzen 122 entweder nur durch die kleinere Bohrung 126 der zweiten Gruppe und durch eine der Bohrungen 64 in der Platte 24 oder durch eine der Bohrungen 116 der ersten Gruppe und durch die fünfte Bohrung 112 in dem unteren Lenker 32 gesteckt werden, da ansonsten der untere Lenker 32 nicht mehr vertikal schwenkbar, sondern starr an den Platten 24 angreift.

Schließlich ist auf dem die oberen Eckbereiche 54 der inneren Platten 24 verbindenden Rohr 68 und der Traverse 38 der Halter 36 für den oberen Lenker aufgeschweißt oder aufgeschraubt, wie dies insbesondere aus Fig. 2 ersichtlich ist.

Die Bedeutung der Einzelteile des Frontkrafthebers und dessen Funktion kann anhand des Vorbeschriebenen wie folgt erläutert werden. Die unteren Lenker 32 des Frontkrafthebers 20 werden in ihrer Höhe verstellt, indem die Hydraulikzylinder 90 kolbenseitig mit unter Druck stehender Flüssigkeit beaufschlagt werden und dadurch wie zuvor beschrieben die Hubarme 26 im Uhrzeigerdrehsinn verschwenken. Diese wiederum nehmen über die Hubstreben 30 die unteren Lenker 32 mit, so daß auch diese eine Schwenkbewegung im Uhrzeigerdrehsinn entweder um die Welle 130 in der größeren Bohrung 124 der zweiten Gruppe oder um den Bolzen 120 in der fünften Bohrung 112 der ersten Gruppe vollführen. Das Absenken der unteren Lenker 32 erfolgt analog dem Anheben entweder durch einen Druckabbau am kolbenseitigen Ende oder einen Druckaufbau am kolbenstangenseitigen Ende des Hydraulikzylinders 90.

Ob die Schwenkbewegung um die Welle 130 oder um den Bolzen 120 erfolgt, ist abhängig davon, in welchem Hubbereich oder in welcher Hubhöhe die unteren Lenker 32 sich bewegen sollen, wobei unter dem Hubbereich die von den unteren Lenkern 32 gegebenenfalls mit den Auslegern 34 überstrichene Fläche vor dem Ackerschlepper 12 verstanden werden soll. So sind bei diesem Ausführungsbeispiel sieben verschiedene Anschlußmöglichkeiten des unteren Lenkers 32 an die Platten 24 möglich. Dabei kann die Hubhöhe viermal und der Hubbereich dreimal verlagert werden.

Die Hubhöhe wird verändert, indem die fünfte Bohrung 112 des unteren Lenkers 32 mit einer der vier Bohrungen 116, die auf dem Kreisbogen um die fünfte Bohrung 118 der ersten Gruppe liegen, in Deckung gebracht und der Bolzen 122 durch die miteinander fluchtenden Bohrungen 112, 116 gesteckt und gesichert wird. Je näher das rückwärtige Ende des unteren Lenkers 32 der Aufstandsfläche kommt, d. h. je tiefer die Bohrung 116 der ersten Gruppe, die mit der fünften Bohrung 112 des unteren Lenkers 32 fluchten soll, liegt, desto höher hebt der Frontkraftheber 20 aus. Zwar hebt er dann auch schon zu Beginn von einer größeren Höhe aus an, dies ist aber teilweise erforderlich, um Geräte mit einem relativ hoch angeordneten Geräteturm aufnehmen zu können. Bemerkenswert ist dabei, daß die Länge der Hubstrebe 30 normalerweise nicht verändert werden muß, um die höhere Anfangshubhöhe zu erreichen.

Der Hubbereich ist von der Kombination der kleineren Bohrung 126 der zweiten Gruppe und einer der drei Bohrungen 64 im unteren Eckbereich 56 der Platten 24 abhängig (siehe hierzu Fig. 3). Je weiter vorne die mit der kleineren Bohrung 126 in Deckung gebrachte Bohrung 64 in dem unteren Eckbereich 56 liegt, desto weiter verlagert sich der Hubbereich der unteren Lenker 32 zu dem Ackerschlepper 12 hin, währenddessen sich der Hubbereich weiter nach vorne und von dem Ackerschlepper 12 weg verlagert, je weiter hinten die mit der kleineren Bohrung 126 in Deckung gebrachte Bohrung 64 des unteren Eckbereichs 56 liegt.

Durch die Vorkehrung der drei Bohrungen 102 in dem unteren Lenker 32 kann die Hubstrebe 30 jeweils so umgesteckt werden, daß der Abstand zwischen dem vorderen Gabelende 86 des Hubarms 26 und der betreffenden Bohrung 102 des unteren Lenkers 32 zumindest im großen und ganzen gleich bleibt.

Soll der Frontkraftheber 20 nicht mit einem Gerät verbunden werden, aber selbst an dem Ackerschlepper 12 verbleiben, dann wird in einfacher Weise die Hubstrebe 30 von dem Hubarm 26 getrennt, der untere Lenker 32 nach oben verschwenkt und mit der Hubstrebe 30 an dem den Rahmen 22 an dem Hauptrahmen 18 des Ackerschleppers 12 haltenden Haltebolzen 50, insbesondere dessen Schaftteil 52, gesichert. Die unteren Lenker 32 stehen dann nicht mehr verkehrsgefährdend vorne über den Ackerschlepper 12 hinaus, sondern verlaufen nahe und zumindest im wesentlichen parallel zu dem Vorderteil 10 des Ackerschleppers 12, so daß die einschlägigen Sicherheitsvorschriften eingehalten werden.

Selbstverständlich ist die Anzahl und die spezifische Anordnung aller vorgenannten Bohrungen 60, 64, 66, 102, 110, 112, 116, 118 nur beispielhaft, so daß einem anderen Anwendungsfall deren Anzahl auch vermindert oder vermehrt und deren Anordnung anders gestaltet werden kann.

Andere Anwendungsfälle könnten etwa eine Verladebühne an einer Laderampe, ein Anschlußgestänge eines Räumfahrzeuges, ein Verbindungsgestänge eines Laders mit der Ladeausrüstung oder eine Dreipunktgerätekupplung am rückwärtigen Ende eines landwirtschaftlich nutzbaren Fahrzeuges sein.

## Patentansprüche

1. Kraftheber (20) für ein Hubgerät (12), insbesondere Frontkraftheber eines Ackerschleppers, mit mindestens einem höhenverstellbaren unteren Lenker (32) und mindestens einem Ausleger (34), wobei der Ausleger (34) einenends mit dem unteren Lenker (32) drehfest verbindbar ist und anderenends vertikal schwenkbar an dem Hubgerät (12) angelenkt ist, dadurch gekennzeichnet, daß der Ausleger (34) wahlweise auch mit dem unteren Lenker (32) vertikal schwenkbar verbindbar ist und an dem Hubgerät (12) drehfest anlenkbar ist.

2. Kraftheber nach Anspruch 1 mit einer Hubeinrichtung (90) zum Höhenverstellen des unteren Lenkers (32), dadurch gekennzeichnet, daß die Hubeinrichtung (90) an dem unteren Lenker (32) angreift.

3. Kraftheber nach Anspruch 1 oder 2, dadurch gekennzeichnet, daß der Ausleger (34) an dem Hubgerät (12) in verschiedenen Winkelstellungen drehfest anschließbar ist.

4. Kraftheber nach einem oder mehreren der vorherigen Ansprüche, wobei der untere Lenker (32) um eine Schwenkachse (120) an dem Ausleger (34) in verschiedene Winkelstellungen schwenkbar und festlegbar ist, dadurch gekennzeichnet, daß entsprechend den möglichen Winkelstellungen auf einem Radius um die Schwenkachse (120) des unteren Lenkers (32) in dem Ausleger (34) Ausnehmungen (116) vorgesehen sind und der untere Lenker (32) im Abstand des Radius von der Schwenkachse (120) ebenfalls eine Ausnehmung (112) aufweist, in die ein Halteelement (122) zur Verbindung mit den Ausnehmungen (116) in dem Ausleger (34) einführbar ist.

5. Kraftheber nach einem oder mehreren der vorherigen Ansprüche, wobei der Ausleger (34) gegenüber dem Hubgerät (12) um eine Schwenkachse (130) verschwenkbar ist, dadurch gekennzeichnet, daß auf einem bestimmten Radius um die Schwenkachse (124, 130) in dem Ausleger (34) wenigstens eine und an dem Hubgerät (12) mehrere Ausnehmungen (126 und 64) vorhanden sind, die über ein Haltemittel (122) miteinander in verschiedenen Winkelstellungen verbindbar sind.

6. Kraftheber nach einem oder mehreren der vorherigen Ansprüche, dadurch gekennzeichnet, daß auf dem unteren Lenker (32) mehrere Anlenkpunkte (102) für die Hubeinrichtung (90) vorgesehen sind, die jeweils einen anderen Abstand zu dessen Schwenkachse (120, 130) aufweisen.

7. Kraftheber nach einem oder mehreren der vorherigen Ansprüche, wobei die Hubeinrichtung (90) als Hydraulikzylinder ausgebildet ist, dadurch gekennzeichnet, daß der Kraftheber (20) auf einem Rahmen (22) bestehend aus geschlossenen oder einseitig offenen Hohlprofilen aufgebaut ist, die in sich je einen Hydraulikzylinder (90) aufnehmen.

8. Kraftheber nach einem oder mehreren der vorherigen Ansprüche, dadurch gekennzeichnet, daß an dem Rahmen (22) mindestens eine die Ausnehmungen (64) des Hubgerätes (12) aufweisende Platte (24) angebracht ist, die einen Winkelhebel (26, 74) zur Übertragung der Kraft von dem Hydraulikzylinder (90) auf den unteren Lenker (32) schwenkbar aufnimmt.

9. Kraftheber nach einem oder mehreren der vorherigen Ansprüche, dadurch gekennzeichnet, daß der Winkelhebel (26, 74) gegenüber der Platte (24) in verschiedenen Stellungen festlegbar ist.

10. Kraftheber nach einem oder mehreren der vorherigen Ansprüche, dadurch gekennzeichnet, daß die Platte (24), der Ausleger (34) und der Winkelhebel (26, 74) jeweils doppelt vorgesehen sind, daß sich zwischen den Winkelhebeln (26, 74) und den unteren Lenkern (32) eine Hubstrebe (30) erstreckt und daß die Winkelhebel (26, 74), die Platten (24), die Ausleger (34), der untere Lenker (32) und die Hubstrebe (30) in teleskopischer Bauart miteinander verbunden sind, derart, daß die Hubstrebe (30) und der Hydraulikzylinder (90) zwischen den beiden Winkelhebeln (26, 74) und die beiden Winkelhebel (26, 74) und die beiden Ausleger (34) zwischen den beiden Platten (24) angeordnet sind.

11. Kraftheber nach einem oder mehreren der vorherigen Ansprüche, dadurch gekennzeichnet, daß die unteren Lenker (32) um ihre Schwenkachse (120) in eine Transportstellung nahe an und parallel oder etwa parallel zu dem Vorderteil (10) des Hubgerätes (12) schwenkbar und mittels der Hubstreben (30) an dem Rahmen (22) festlegbar sind.

12. Kraftheber nach einem oder mehreren der vorherigen Ansprüche, der spiegelbildlich zu einer Längsmittenachse eines Ackerschleppers (12) ausgebildet ist und zu jeder Seite der Längsmittenachse einen unteren Lenker (32), eine Hubeinrichtung (90), einen Ausleger (34) und auf der Längsmittenachse einen Halter (36) für einen oberen Lenker aufweist, dadurch gekennzeichnet, daß sich zwischen den der Längsmittenachse zugelegenen Platten (24) eine Verstrebung (68) erstreckt, die den Halter (36) für den oberen Lenker trägt und in sich eine mit allen Winkelhebeln (26, 74) verbundene Welle (62) drehbar aufnimmt.

13. Kraftheber nach einem oder mehreren der vorherigen Ansprüche, dadurch gekennzeichnet, daß der Rahmen (22) den gesamten Kraftheber (20) trägt und wahlweise mit dem Vorderteil (10) des Ackerschleppers (12) verbindbar und mittels Haltebolzen (50) sicherbar ist.

14. Kraftheber nach einem oder mehreren der vorherigen Ansprüche, dadurch gekennzeichnet, daß die Haltebolzen (50) gleichzeitig der Aufnahme der Hubstreben (30), wenn sich die unteren Lenker (32) in ihrer Transportstellung befinden, dienen.


**Claims**

1. Power lift (20) for a lifting apparatus (12), in particular a front power lift of an agricultural tractor, having at least one vertically-adjustable lower link (32) and at least one overhung arm (34), the overhung arm (34) being connectable rotation-fast at one end to the lower link (32) and being articulated to the lifting apparatus (12) at the other end to be vertically swingable, characterised in that the overhung arm (34) can also be optionally connected to the lower link (32) to be vertically swingable and attached to the lifting apparatus (12) to be rotation-fast.

2. Power lift according to claim 1 having a lifting device (90) for adjusting the height of the lower link (32), characterised in that the lifting device (90) acts on the lower link (32).

3. Power lift according to claim 1 or 2, characterised in that the overhung arm (34) can be connected to the lifting apparatus (12) in various angular positions to be rotation-fast.

4. Power lift according to one or more of the preceding claims, wherein the lower link (32) can be swung about a pivot (120) on the overhung arm (34) into various angular positions and be fixed therein, characterised in that in accordance with the possible angular positions holes (116) are provided in the arm (34) at a radius around the pivot (120) of the lower link (32) and, at the distance of the radius from the pivot (120), the lower link (32) likewise has a hole (112) into which a retaining element (122) can be serted for connection with the holes (116) in the overhung arm (34).

5. Power lift according to one or more of the preceding claims, wherein the overhung arm (34) can be swung about a pivot (130) with respect to the lifting apparatus (12), characterised in that at a certain radius about the pivot (124, 130) at least one hole is present in the arm (34) and a plurality of holes (126 and 64) is present in the lifting apparatus (12), the holes being connectable with one another in various angular positions through the medium of a retaining means (122).

6. Power lift according to one or more of the preceding claims, characterised in that a plurality of articulation points (102) for the lifting device (90) is provided on the lower link (32), each of the articulation points being at a different distance from its pivot (120, 130).

7. Power lift according to one or more of the preceding claims, wherein the lifting device (90) is in the form of a hydraulic cylinder, characterised in that the power lift (20) is mounted on a frame (22) consisting of closed hollow sections or hollow sections open on one side, each of which accommodates a hydraulic cylinder (90).

8. Power lift according to one or more of the preceding claims, characterised in that at least one plate (24) containing the holes (64) of the lifting apparatus (12) is mounted on the frame (22), the plate receiving swingably an angle lever (26, 74) for transmitting the force from the hydraulic cylinder (90) to the lower link (32).

9. Power lift according to one or more of the preceding claims, characterised in that the angle lever (26, 74) can be fixed in various position with respect to the plate (24).

10. Power lift according to one or more of the preceding claims, characterised in that the plate (24), the overhung arm (34) and the angle lever (26, 74) are each provided in double form, a lifting strut (30) extends between the angle levers (26, 74) and the lower links (32), and the angle levers (26, 74), the plates (24), the overhung arms (34), the lower link (32) and the lifting strut (30) are connected to one another in a telescopic construction in such manner that the lifting strut (30) and the hydraulic cylinder (90) are arranged between the two angle levers (26, 74) and the two angle levers (26, 74) and the two overhung arms (34) are arranged between the two plates (24).

11. Power lift according to one or more of the preceding claims, characterised in that the lower links (32) can be swung about their pivots (120) into a transport position close to and parallel or approximately parallel to the front part (10) of the lifting apparatus (12) and can be fixed to the frame (22) by means of the lifting struts (30).

12. Power lift according to one or more of the preceding claims which is formed in mirror image fashion with respect to a longitudinal central axis of an agricultural tractor (12) and has a lower link (32), a lifting device (90) and an overhung arm (34) on each side of the longitudinal central axis and a holder (36) for an upper link on the longitudinal central axis, characterised in that between the plates (24) located towards the longitudinal central axis there extends a strut (68) bearing the holder (36) for the upper link and accommodating rotatably in itself a shaft (62) connected to all the angle levers (26, 74).

13. Power lift according to one or more of the preceding claims, characterised in that the frame (22) bears the entire power lift (20) and can be connected optionally to the front part (10) of the agricultural tractor (12) and be secured by means of retaining bolts (50).

14. Power lift according to one or more of the preceding claims, characterised in that the retaining bolts (50) serve at the same time to receive the lifting struts (30) when the lower links (32) are in their transport position.

## Revendications

1. Elévateur de puissance (20) pour un dispositif de levage (12), en particulier un élévateur de puissance frontal de tracteur agricole, comportant au moins une biellette inférieure (32) réglable en hauteur et au moins un bras (34), le bras (34) pouvant être relié sans possibilité de rotation, par une extrémité, à la biellette inférieure (32) et étant articulé, à l'autre extrémité, à la biellette inférieure (32) et étant articulé, à l'autre extrémité, de façon à pouvoir pivoter verticalement, au dispositif de levage (12), caractérisé en ce que le bras (34) peut aussi, à volonté, être relié de façon à pouvoir pivoter verticalement à la biellette inférieure (32) et peut être articulé sans possibilité de rotation au dispositif de levage (12).

2. Elévateur de puissance selon la revendication 1 comportant un dispositif élévateur (90) pour le réglage en hauteur de la biellette inférieure (32), caractérisé en ce que le dispositif élévateur (90) agit sur la biellette inférieure (32).

3. Elévateur de puissance selon la revendication 1 ou 2, caractérisé en ce que le bras (34) peut être raccordé sans possibilité de rotation au dispositif de levage (12) dans différentes positions angulaires.

4. Elévateur de puissance selon une ou plusieurs des revendications précédentes, la biellette inférieure (32) pouvant, en pivotant autour d'un axe de pivotement (120) sur le bras (34), prendre différentes positions angulaires et y être fixée, caractérisé en ce qu'il est prévu, selon les positions angulaires possibles, sur une circonférence entourant l'axe de pivotement (120) de la biellette inférieure (32), dans le bras (34), des évidements (116), et en ce que la biellette inférieure (32) comporte également, à la distance du rayon de l'axe de pivotement (120), un évidement (112) dans lequel un élément d'arrêt devant assurer la liaison avec les évidements (116) du bras (34) peut être introduit.

5. Elévateur de puissance selon une ou plusieurs des revendications précédentes, le bras (34) pouvant pivoter par rapport au dispositif de levage (12) autour d'un axe de pivotement (130), caractérisé en ce qu'il est prévu, sur une circonférence déterminée autour de l'axe de pivotement (124, 130), dans le bras (34), au moins un évidement et sur le dispositif de levage (12) plusieurs évidements (126 et 64) qui peuvent être reliés entre eux par un moyen d'arrêt (122) dans différentes positions angulaires.

6. Elévateur de puissance selon une ou plusieurs des revendications précédentes, caractérisé en ce qu'il est prévu sur la biellette inférieure (32) plusieurs points d'articulation (102) pour le dispositif élévateur (90) qui sont chacun à une distance différente de son axe de pivotement (120, 130).

7. Elévateur de puissance selon une ou plusieurs des revendications précédentes, le dispositif élévateur (90) étant réalisé sous la forme d'un vérin hydraulique, caractérisé en ce que l'élévateur de puissance (20) est érigé sur un bâti (22) comprenant des profilés creux fermés ou ouverts d'un côté qui reçoivent chacun en leur intérieur un vérin hydraulique (90).

8. Elévateur de puissance selon une ou plusieurs des revendications précédentes, caractérisé en ce qu'au moins une plaque (24) comportant les évidements (64) du dispositif de levage (12) est placée sur le bâti (22), qui reçoit un levier coudé (26, 74) pour la transmission de la force du vérin hydraulique (90) à la biellette inférieure (32), de façon qu'il puisse pivoter.

9. Elévateur de puissance selon une ou plusieurs des revendications précédentes, caractérisé en ce que le levier coudé (26, 74) peut être bloqué dans différentes positions par rapport à la plaque (24).

10. Elévateur de puissance selon une ou plusieurs des revendications précédentes, caractérisé en ce que la plaque (24), le bras (34) et le levier coudé (26, 74) sont prévus chacun en double, en ce qu'une entretoise de levage (30) s'étend entre les leviers coudés (26, 74) et les biellettes inférieures (32), et en ce que le levier coudé (26, 74), les plaques (24), les bras (34), la biellette inférieure (32) et l'entretoise de levage (30) sont reliés télescopiquement, de telle façon que l'entretoise de levage (30) et le vérin hydraulique (90) sont placés entre les deux leviers coudés (26, 74) et que les deux leviers coudés (26, 74) et les deux bras (34) sont placés entre les deux plaques (24).

11. Elévateur de puissance selon une ou plusieurs des revendications précédentes, caractérisé en ce que les biellettes inférieures (32) peuvent passer en pivotant autour de leur axe de pivotement (120) dans une position de transport proche de la partie antérieure (10) du dispositif de levage (12) et parallèle ou sensiblement parallèle à celle-ci et être bloquées sur le bâti (22) au moyen des entretoises de levage (30).

12. Elévateur selon une ou plusieurs des revendications précédentes, qui est réalisé symétriquement par rapport à l'axe de symétrie longitudinal d'un tracteur agricole (12) et comporte de chaque côté de l'axe de symétrie longitudinal une biellette inférieure (32), un dispositif élévateur (90), un bras (34) et, sur l'axe de symétrie longitudinal, un support (36) pour une biellette supérieure, caractérisé en ce qu'il s'étend entre les plaques (24) adjointes à l'axe de symétrie longitudinal une entretoise (68) qui supporte le support (36) pour la biellette supérieure et reçoit en son intérieur de façon qu'il puisse tourner un arbre (62) relié à tous les leviers coudés (26, 74).

13. Elévateur de puissance selon une ou plusieurs des revendications précédentes, caractérisé en ce que le bâti (22) supporte l'ensemble de l'élévateur de puissance (20) et peut être, à volonté, relié à la partie antérieure (10) du tracteur agricole (12) et être bloqué au moyen de boulons de fixation (50).

14. Elévateur de puissance selon une ou plusieurs des revendications précédentes, caractérisé en ce que les boulons de fixation (50) servent en même temps à la réception des entretoises de levage (30), lorsque les biellettes inférieures (32) se trouvent dans leur position de transport.

FIG.1

FIG.2

FIG.3